# EUROPÄISCHE PATENTSCHRIFT

(11) **EP 2 457 794 B1**
(45) Veröffentlichungstag und Bekanntmachung des Hinweises auf die Patenterteilung: **15.07.2020**
(21) Anmeldenummer: 11185393.3
(22) Anmeldetag: 17.10.2011
(51) Int. Cl.: B60W 30/18, F16H 63/50

(54) **VERFAHREN ZUM BETREIBEN EINES ANTRIEBSSTRANGS**
METHOD FOR OPERATING A DRIVE TRAIN
PROCÉDÉ DESTINÉ AU FONCTIONNEMENT D'UNE CHAÎNE CINÉMATIQUE

(30) Priorität: 24.11.2010 DE 102010061823
(43) Veröffentlichungstag der Anmeldung: 30.05.2012
(73) Patentinhaber: ZF Friedrichshafen AG, 88046 Friedrichshafen (DE)
(72) Erfinder: Kaltenbach, Johannes, 88048 Friedrichshafen (DE)
(74) Vertreter: ZF Friedrichshafen AG

(56) Entgegenhaltungen:
- EP-A2- 1 895 202
- DE-A1- 10 043 420
- DE-A1- 10 160 308
- DE-A1-102006 003 711
- DE-A1-102008 000 343
- DE-A1-102009 020 651
- US-A1- 2006 142 117
- US-A1- 2009 176 617

## Beschreibung

Die Erfindung betrifft ein Verfahren zum Betreiben eines Antriebsstrangs eines Kraftfahrzeugs, insbesondere eines Hybridfahrzeugs.

Antriebsstränge von Kraftfahrzeugen mit einem Antriebsaggregat und einem zwischen das Antriebsaggregat und einem Abtrieb geschalteten, automatischen Schaltgetriebe mit reibschlüssigen Schaltelementen, an welchen bei der Ausführung von Lastschaltungen Verlustleistung entsteht, sind aus dem Stand der Technik hinlänglich bekannt. So offenbart die DE 198 50 549 A1 einen Antriebsstrang eines Hybridfahrzeugs, dessen Antriebsaggregat von einem Verbrennungsmotor und einer elektrischen Maschine gebildet wird, wobei zwischen das Antriebsaggregat und einen Abtrieb ein als Doppelkupplungsgetriebe ausgebildetes, automatisches Schaltgetriebe geschaltet ist, und wobei Kupplungen einer Doppelkupplung des Doppelkupplungsgetriebes als reibschlüssige Schaltelemente bei der Ausführung von Lastschaltungen dienen.

Bei der Ausführung von Lastschaltungen, insbesondere bei der Ausführung von Zughochschaltungen oder Zugrückschaltungen, an einem solchen Antriebsstrang unter Beteiligung reibschlüssiger Schaltelemente des automatischen Schaltgetriebes tritt an den reibschlüssigen Schaltelementen Verlustleistung auf. Eine solche Verlustleistung, die von den reibschlüssigen Schaltelementen aufzunehmen ist, bewirkt einerseits einen erhöhten Verschleiß der Schaltelemente, andererseits wird hierdurch unnötig Kraftstoff verbraucht. Es besteht daher Bedarf an Verfahren zum Betreiben eines Antriebsstrangs, dessen automatisches Schaltgetriebe reibschlüssige Lastschaltelemente umfasst, mit welchen die Verlustleistung an den reibschlüssigen Schaltelementen reduziert werden kann, um einerseits den Verschleiß der reibschlüssigen Schaltelemente und andererseits den Kraftstoffbedarf zu reduzieren.

DE 10 2008 000343 A1 offenbart ein Verfahren zum Betreiben eines Antriebsstrangs eines Kraftfahrzeugs mit einem zumindest einen Verbrennungsmotor aufweisenden Antriebsaggregat und mit einem zwischen das Antriebsaggregat und einen Abtrieb geschalteten, automatischen Schaltgetriebe mit reibschlüssigen Schaltelementen. Die Ausführung einer Zughochschaltung erfolgt unter Beteiligung mindestens eines zuschaltenden reibschlüssigen Schaltelements des automatischen Schaltgetriebes und mindestens eines wegschaltenden reibschlüssigen Schaltelements des automatischen Schaltgetriebes. Zur Ausführung einer Zughochschaltung wird während des Anlegevorgangs eines zuschaltenden reibschlüssigen Schaltelements das vom Verbrennungsmotor bereitgestellte Moment reduziert.

US 2006/176617 A1 offenbart ein Verfahren zur Ausführung einer Zugrückschaltung unter Reduzierung eines vom Verbrennungsmotor bereitgestellten Moments.

Aus DE 10 2009 020651 A1, EP 1 895 202 A2, DE 10 2006 003771 A1, US 2009/176617 A1, DE 101 60 308 A1 und DE 100 43 420 A1 ist weiterer Stand der Technik bekannt.

Hiervon ausgehend liegt der vorliegenden Erfindung die Aufgabe zu Grunde ein neuartiges Verfahren zum Betreiben eines Antriebsstrangs eines Kraftfahrzeugs, insbesondere eines Hybridfahrzeugs, zu schaffen, mit welchem die Verlustleistung an reibschlüssigen Schaltelementen reduziert und der Kraftstoffverbrauch verringert werden kann.

Diese Aufgabe wird durch ein Verfahren gemäß Anspruch 1 gelöst.

Mit dem erfindungsgemäßen Verfahren, welches nur dann ausgeführt wird, wenn ein Zielgang der auszuführenden Zughochschaltung oder Zugrückschaltung einer der letzten drei Gänge, vorzugsweise einer der letzten zwei Gänge, des automatischen Schaltgetriebes ist, kann die Verlustleistung an reibschlüssigen Schaltelementen eines automatischen Schaltgetriebes bei der Ausführung einer Zughochschaltung sowie bei der Ausführung einer Zugrückschaltung reduziert werden. Hierdurch kann die mechanische Belastung und damit der Verschleiß der als Lastschaltelemente dienenden, reibschlüssigen Schaltelemente reduziert werden. Weiterhin kann der Kraftstoffverbrauch des Kraftfahrzeugs verringert werden.

Dann, wenn bei einem Antriebstrang eines Hybridfahrzeugs das Antriebsaggregat zusätzlich zum Verbrennungsmotor eine elektrische Maschine umfasst, und dann, wenn bei der Ausführung der Zughochschaltung oder Zugrückschaltung die elektrische Maschine nicht über an der Ausführung der Schaltung beteiligte reibschlüssige Schaltelemente des automatischen Schaltgetriebes auf den Abtrieb wirkt, wird die Reduktion des vom Verbrennungsmotor bereitgestellten Moments zumindest teilweise durch Erhöhung des von der elektrischen Maschine bereitgestellten Moments kompensiert. Dann, wenn die Erfindung an einem Antriebsstrang eines Hybridfahrzeugs zum Einsatz kommt, dessen elektrische Maschine nicht über die Lastschaltelemente auf den Abtrieb wirkt, die an der Ausführung der Schaltung beteiligt sind, kann die elektrische Maschine die Reduzierung des Verbrennungsmotormoments zumindest teilweise kompensieren.

Die Reduzierung des vom Verbrennungsmotor bereitgestellten Moments bei Ausführung einer Zughochschaltung oder Zugrückschaltung wird vorzugsweise ausschließlich dann zuzulassen, wenn eine Fahrsituation des Kraftfahrzeugs und/oder eine Verkehrssituation des Kraftfahrzeugs die Reduzierung des vom Verbrennungsmotor bereitgestellten Moments zulässt.

Die Reduzierung des vom Verbrennungsmotor bereitgestellten Moments wird bei Ausführung einer Zughochschaltung oder Zugrückschaltung vorzugsweise ausschließlich dann zuzulassen, wenn eine fahrerseitige Fahrpedalbetätigung kleiner als ein Grenzwert ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Schema eines ersten Antriebsstrangs, bei welchem das erfindungsgemäße Verfahren zum Einsatz kommen kann;
- Fig. 2: ein Schema eines zweiten Antriebsstrangs, bei welchem das erfindungsgemäße Verfahren zum Einsatz kommen kann;
- Fig. 3: ein Schema eines dritten Antriebsstrangs, bei welchem das erfindungsgemäße Verfahren zum Einsatz kommen kann;
- Fig. 4: ein Schema eines vierten Antriebsstrangs, bei welchem das erfindungsgemäße Verfahren zum Einsatz kommen kann;
- Fig. 5: ein Diagramm zur Verdeutlichung des Standes der Technik bei der Ausführung einer Zughochschaltung;
- Fig. 6: ein Diagramm zur Verdeutlichung einer ersten Variante der Erfindung bei der Ausführung einer Zughochschaltung;
- Fig. 7: ein Diagramm zur Verdeutlichung einer zweiten Variante der Erfindung bei der Ausführung einer Zughochschaltung;
- Fig. 8: ein Diagramm zur Verdeutlichung des Standes der Technik bei der Ausführung einer Zugrückschaltung; und
- Fig. 9: ein Diagramm zur Verdeutlichung einer weiteren Variante der Erfindung bei der Ausführung einer Zugrückschaltung.

Die hier vorliegende Erfindung betrifft ein Verfahren zum Betreiben eines Antriebsstrangs eines Kraftfahrzeugs.

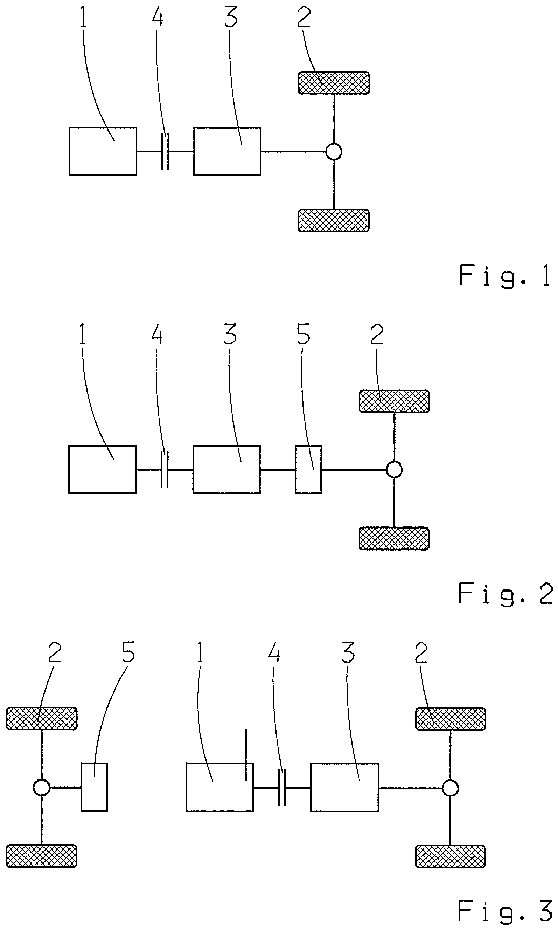

Fig. 1 zeigt einen Antriebsstrang eines Kraftfahrzeugs mit einem Verbrennungsmotor 1, einem Abtrieb 2 und einem zwischen den Verbrennungsmotor 1 und den Abtrieb 2 geschalteten, automatischen Schaltgetriebe 3.

Das automatische Schaltgetriebe umfasst eine Vielzahl von reibschlüssigen Schaltelementen, die als Kupplungen oder Bremsen ausgeführt sein können. Zwischen den Verbrennungsmotor 1 und das automatische Schaltgetriebe 3 ist eine Trennkupplung 4 geschaltet.

Dann, wenn an einem solchen Antriebsstrang eine Lastschaltung, insbesondere eine Zughochschaltung oder eine Zugrückschaltung, aufgeführt wird, ist an der Schaltungsausführung mindestens ein zuschaltendes reibschlüssiges Schaltelement des automatischen Schaltgetriebes 3 und mindestens ein wegschaltendes reibschlüssiges Schaltelement des automatischen Schaltgetriebes 3 beteiligt.

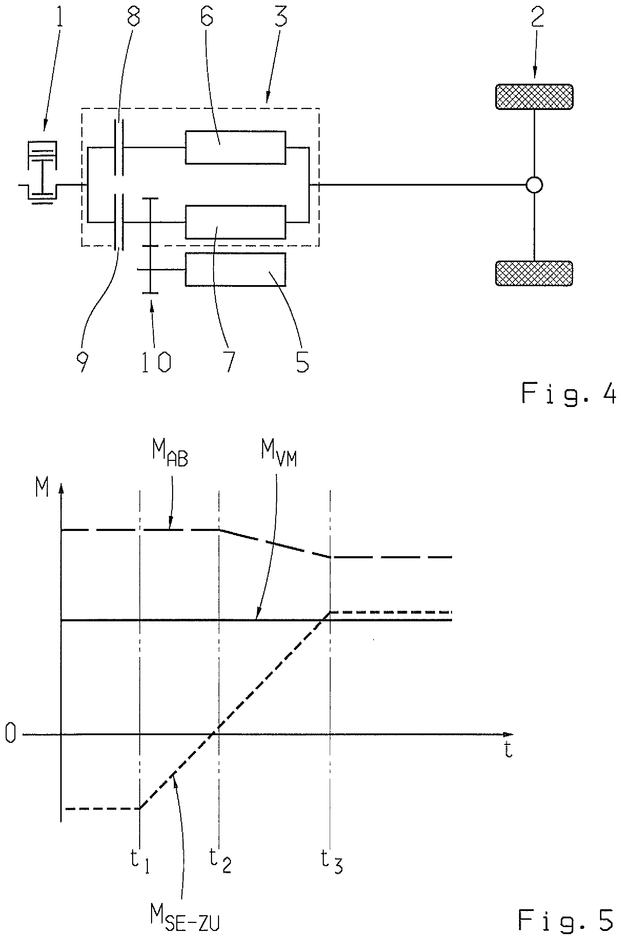

Fig. 5 verdeutlicht die Ausführung einer konventionellen Zughochschaltung an einem solchen Antriebsstrang, wobei in Fig. 5 über der Zeit t mehrere Momentverläufe aufgetragen sind, nämlich einerseits ein Momentverlauf M_{VM} für das vom Verbrennungsmotor 1 bereitgestellte Moment, ein Momentverlauf M_{AB} für das am Abtrieb 2 anliegende Moment, und ein Momentverlauf M_{SE-ZU} für ein bei Ausführung der Zughochschaltung zuschaltendes, reibschlüssiges Schaltelement des Schaltgetriebes 3.

Die Ausführung der Zughochschaltung beginnt zum Zeitpunkt t1, wobei zwischen den Zeitpunkten t1 und t2 das zuschaltende, reibschlüssige Schaltelement vom vollständig geöffneten Zustand bis zum sogenannten Anlegpunkt geschlossen wird. Zwischen den Zeitpunkten t1 und t2 erfolgt demnach das sogenannte Anlegen des zuschaltenden, reibschlüssigen Schaltelements, wobei während des Anlegevorgangs desselben noch kein nennenswertes Moment übertragen kann. Das Anlegen bzw. der Anlegevorgang des Schaltelements wird auch als Leerweg desselben bezeichnet, wobei in Fig. 5 das Anlegen des zuschaltenden Schaltelements durch ein negatives Moment exemplarisch veranschaulicht wird.

Zum Zeitpunkt t2 ist das Anlegen des zuschaltenden Schaltelements abgeschlossen. Zwischen den Zeitpunkten t2 und t3 erfolgt eine Lastübernahme durch das zuschaltende Schaltelement des automatischen Schaltgetriebes 3, indem die Übertragungsfähigkeit desselben weiter erhöht wird, und zwar soweit, bis dasselbe das vom Verbrennungsmotor 2 bereitgestellte Moment M_{VM} übertragen kann. Wie Fig. 5 entnommen werden kann, sinkt dabei während der Lastübernahme zwischen den Zeitpunkten t2 und t3 das am Abtrieb 2 wirksame Moment M_{AB}. Zwischen den Zeitpunkten t2 und t3 tritt am zuschaltenden Schaltelement Verlustleistung auf.

Um nun bei der Ausführung einer Zughochschaltung die Verlustleistung zu reduzieren, wird nach einem ersten Aspekt der Erfindung vorgeschlagen, zur Ausführung einer Zughochschaltung zumindest während des Anlegens bzw. Anlegevorgangs des zuschaltenden, reibschlüssigen Schaltelements das vom Verbrennungsmotor 1 bereitgestellte Moment zu reduzieren. Erfindungsgemäß wird demnach zumindest zwischen den Zeitpunkten t1 und t2 das vom Verbrennungsmotor 1 bereitgestellte Moment M_{VM} reduziert, wobei nach einer vorteilhaften Weiterbildung der Erfindung vorgesehen ist, dass die Reduzierung des vom Verbrennungsmotor bereitgestellten Moments M_{VM} und damit des am Abtrieb wirksamen Moments M_{AB} gleichzeitig mit dem Beginn des Anlegens bzw. Anlegevorgangs des zuschaltenden Schaltelements beginnt, also beginnend zum Zeitpunkt t1. Da bereits zum Zeitpunkt t2 ein reduziertes Verbrennungsmotormoment M_{VM} vorliegt, kann die Verlustleistung reduziert werden.

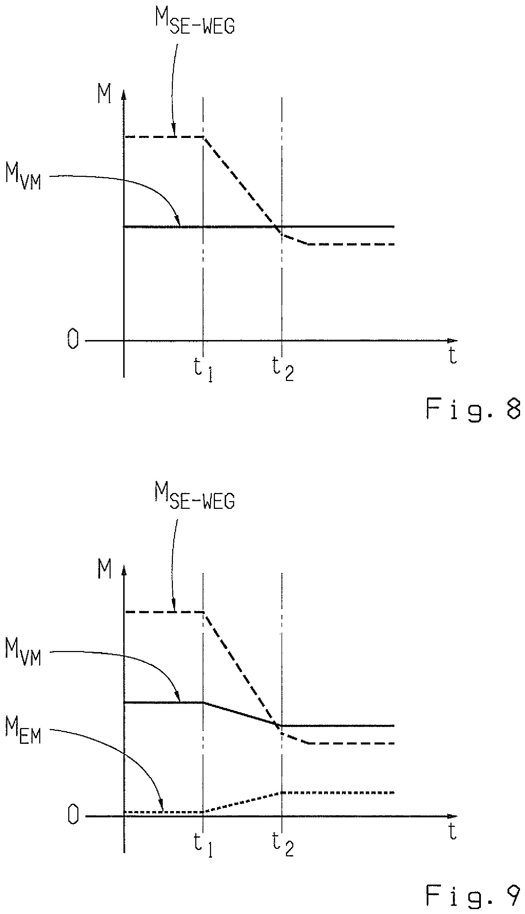

Fig. 8 verdeutlicht die aus dem Stand der Technik bekannte Vorgehensweise bei der Ausführung einer Zugrückschaltung, wobei in Fig. 8 über der Zeit t einerseits das vom Verbrennungsmotor 1 bereitgestellte Moment M_{VM} und andererseits das vom wegschaltenden Schaltelement des automatischen Schaltgetriebes 3 übertragene Moment M_{SE-WEG} gezeigt sind.

Fig. 8 zeigt, dass bei der Ausführung einer konventionellen Zugrückschaltung, die zum Zeitpunkt t1 beginnt, beginnend zum Zeitpunkt t1 die Übertragungsfähigkeit des wegschaltenden Schaltelements verringert wird, wobei zum Zeitpunkt t2 die Übertragungsfähigkeit des wegschaltenden Schaltelements dem vom Verbrennungsmotor 1 bereitgestellten Moment M_{VM} entspricht, wobei ab dem Zeitpunkt t2 das wegschaltende Schaltelement zu rutschen beginnt. Mit dem Zeitpunkt t2 beginnt demnach diejenige Schaltphase der Zugrückschaltung, in welcher am wegschaltenden Schaltelement Verlustleistung anfällt.

Nach einem zweiten Aspekt der Erfindung wird vorgeschlagen, zur Reduzierung der Verlustleistung bei Ausführung einer Zugrückschaltung das vom Verbrennungsmotor 1 bereitgestellte Moment M_{VM} zu reduzieren, und zwar zumindest während des Absenkens bzw. Absenkvorgangs der Übertragungsfähigkeit des wegschaltenden, reibschlüssigen Schaltelements vorzugsweise bis zum Rutschen desselben, wobei nach einer vorteilhaften Weiterbildung dieses Aspekts der Erfindung gleichzeitig mit dem Beginn des Absenkens der Übertragungsfähigkeit des wegschaltenden, reibschlüssigen Schaltelements, also beginnende mit dem Zeitpunkt t1, das vom Verbrennungsmotor 1 bereit gestellte Moment M_{VM} reduziert wird. Dadurch wird gewährleistet, dass das vom Verbrennungsmotor 1 bereitgestellte Moment M_{VM} bereits zum Zeitpunkt t2, in welchem das Wegschalten des Schaltelements zu Rutschen beginnt, reduziert ist, sodass auch hierdurch die Verlustleistung reduziert werden kann.

Weitere Details der Erfindung werden nachfolgend für die bevorzugte Verwendung an einem Antriebsstrang eines Hybridfahrzeugs beschrieben, dessen Antriebsaggregat zusätzlich zum Verbrennungsmotor 1 eine elektrische Maschine umfasst. So zeigen Fig. 2 bis 4 jeweils ein Antriebsstrangschema für ein Hybridfahrzeug, dessen Antriebsstrang zusätzlich zum Verbrennungsmotor 1 eine elektrische Maschine 5 umfasst.

In Fig. 2 ist die elektrische Maschine 5 zwischen das automatische Schaltgetriebe 3 und den Abtrieb 2 geschaltet, sodass die elektrische Maschine 5 permanent auf den Abtrieb 2 einwirken kann ohne Kraftfluss über die Schaltelemente des automatischen Schaltgetriebes 3.

Auch im Antriebsstrang eines Hybridfahrzeugs der Fig. 3 kann die elektrische Maschine 5 permanent auf den Abtrieb 2 ohne Kraftfluss über die Schaltelemente des automatischen Schaltgetriebes 3 wirken, wobei in Fig. 3 der Antriebsstrang als sogenannter Achshybrid ausgeführt ist, bei welchem die elektrische Maschine 5 des Antriebaggregats auf eine andere Achse des Abtriebs 2 wirkt als der Verbrennungsmotor 1.

Beim Antriebsstrang eines Hybridfahrzeugs gemäß Fig. 4 ist das automatische Schaltgetriebe 3 als Doppelkupplungsgetriebe mit zwei Teilgetrieben 6 und 7 ausgeführt, wobei der Verbrennungsmotor 1 über eine Lastschaltkupplung 8 an die Eingangswelle des Teilgetriebes 6 und über eine weitere Lastschaltkupplung 9 an die Eingangswelle des Teilgetriebes 7 ankoppelbar ist. Die elektrische Maschine 5 des Antriebsaggregats ist einem der beiden Teilgetriebe, nämlich dem Teilgetriebe 7, zugeordnet, nämlich derart, dass die elektrische Maschine 5 über eine Stirnradstufe 10 an die Eingangswelle des Teilgetriebes 7 gekoppelt ist. Auch beim Antriebsstrang der Fig. 4 kann die elektrische Maschine 5 auf den Abtrieb 2 unter Umgehung von an der Schaltung beteiligten, reibschlüssigen Lastschaltelementen einwirken, nämlich unter Umgehung der als Lastschaltkupplungen 8 und 9 ausgebildeten Lastschaltelemente des Schaltgetriebes 3.

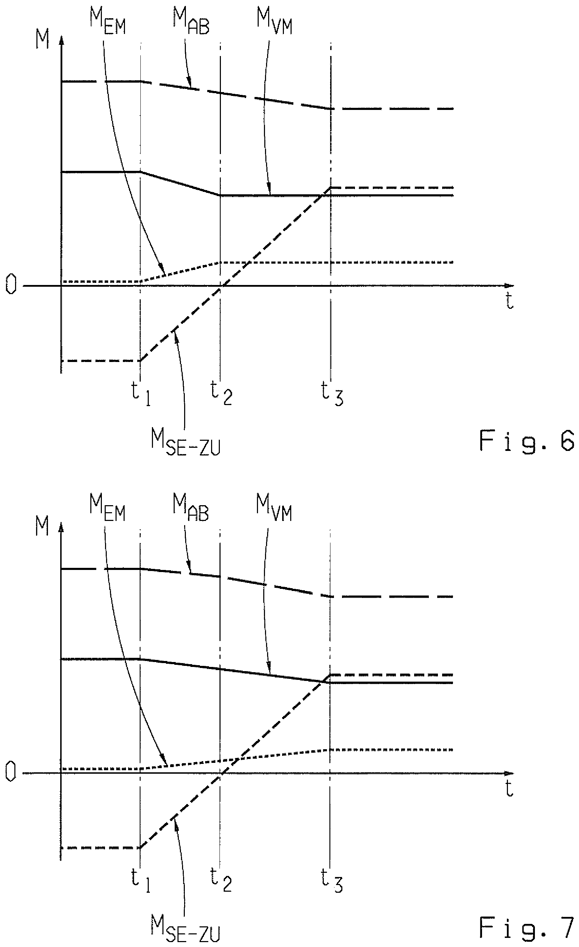

Fig. 6 und 7 verdeutlichen die Ausführung einer erfindungsgemäßen Zughochschaltung an einem Antriebsstrang eines Hybridfahrzeugs, dessen elektrische Maschine 5 nicht über die an der Ausführung der Zughochschaltung beteiligten Lastschaltelemente des automatischen Schaltgetriebes 3 auf den Abtrieb 2 wirkt.

So sind in Fig. 6 und 7 über der Zeit t jeweils vier zeitliche Momentverläufe gezeigt, nämlich jeweils ein Momentverlauf M_{VM} des vom Verbrennungsmotor 1 bereitgestellten Moments, ein Momentverlauf M_{EM} des von der elektrischen Maschine 5 bereitgestellten Moments, ein Momentverlauf M_{AB} des am Abtrieb 2 wirksamen Moments sowie ein Momentverlauf M_{SE-ZU} des bei Ausführung der Zughochschaltung zuschaltenden, reibschlüssigen Schaltelements des Schaltgetriebes 3.

Für Fig. 6 und 7 soll davon ausgegangen werden, dass eine Zughochschaltung am Antriebsstrang der Fig. 4 ausgeführt wird, nämlich eine Zughochschaltung vom einem Istgang im Teilgetriebe 6 in einen Zielgang im Teilgetriebe 7, wobei es sich dann beim zuschaltenden, reibschlüssigen Schaltelement um die Lastschaltkupplung 9 handelt und wobei dann die Übersetzung des Zielgangs im Teilgetriebe 7 kleiner als die Übersetzung des Istgangs im Teilgetriebe 6 ist.

Fig. 6 zeigt eine Variante der Erfindung, in welcher ausschließlich während des Anlegens des zuschaltenden, reibschlüssigen Schaltelements, also zwischen den Zeitpunkten t1 und t2, das vom Verbrennungsmotor bereitgestellte Moment M_{VM} reduziert wird.

Diese Reduktion des vom Verbrennungsmotor bereitgestellten Moments M_{VM}, die eine Reduktion des am Abtrieb wirksamen Moments M_{AB} bewirkt, beginnt vorzugsweise gleichzeitig mit dem Anlegvorgang des zuschaltenden Schaltelements, wobei gemäß Fig. 6 zwischen den Zeitpunkten t1 und t2 nicht nur das vom Verbrennungsmotor 1 bereitgestellte Moment M_{VM} reduziert wird, vielmehr wird auch das von der elektrischen Maschine 5 bereitgestellte Moment M_{EM} erhöht, um so die Reduktion des vom Verbrennungsmotor 1 bereitgestellten Moments M_{EM} zumindest teilweise zu kompensieren.

In der Variante der Fig. 6 erfolgt die Reduktion des vom Verbrennungsmotor 1 bereitgestellten Moments M_{VM} sowie der Erhöhung des von der elektrischen Maschine 5 bereitgestellten Moments M_{EM} ausschließlich zwischen den Zeitpunkten t1 und t2 und demnach ausschließlich während des Anlegens des zuschaltenden Schaltelements, nämlich jeweils gleichzeitig beginnend mit dem Anlegvorgang des zuschaltenden, reibschlüssigen Schaltelements und damit beginnend zum Zeitpunkt t1.

In der Variante der Fig. 6 wird demnach die zumindest teilweise Verlagerung des bereitgestellten Moments vom Verbrennungsmotor 1 auf die elektrische Maschine 5 und damit der zumindest teilweise Lastübergange vom Verbrennungsmotor 1 auf die elektrische Maschine 5 zum Zeitpunkt t2 beendet.

Dann, wenn der Anlegvorgang des zuschaltenden Schaltelements abgeschlossen ist, wird in der Variante der Fig. 6 das vom Verbrennungsmotor 1 bereitgestellte Moment M_{VM} und das von der elektrischen Maschine 5 bereitgestellte Moment M_{EM} unverändert bzw. konstant gehalten.

Die Erhöhung des von der elektrischen Maschine 5 bereitgestellten Moments M_{EM} wird durch das von derselben maximal bereitstellbare Moment beschränkt, wobei das von der elektrischen Maschine 5 maximal bereitstellbare Moment insbesondere durch die Temperatur und den Ladezustand eines elektrischen Energiespeichers, der mit der elektrische Maschine 5 zusammenwirkt, bestimmt wird.

Mit der Erfindung können bei einem Hybridantriebstrang das Reibmoment und die Verlustleistung am zuschaltenden Schaltelement der Lasthochschaltung reduziert werden, ohne dass bei entsprechender Ansteuerung und Dimensionierung der elektrischen Maschine 5 im Vergleich zu einer konventionellen Schaltung das am Abtrieb 2 wirksame Moment absinkt.

Ferner kann die benötigte Schaltzeit reduziert werden, da die Lastübernahme durch das zuschaltende Schaltelement zwischen den Zeitpunkten t2 und t3 schneller erfolgen kann, da das abgesenkte Moment des Verbrennungsmotors 1 vom zuschaltenden Schaltelement früher erreicht wird.

Durch die Verkürzung der Lastübernahmephase, die durch die Zeitpunkte t2 und t3 definiert wird, kann Verlustleistung am Schaltelement zusätzlich reduziert werden.

In Fig. 6 ist das von der elektrischen Maschine 5 bereitgestellte Moment M_{EM} auf die Welle des zuschaltenden Schaltelements bezogen und zwar unabhängig von der Stelle, an welcher die elektrische Maschine 5 tatsächlich an den Antriebsstrang gekoppelt ist. Demnach sind in Fig. 6 Übersetzungen von der Welle der elektrischen Maschine 5 bis zur Welle des zuschaltenden Schaltelements berücksichtigt. Beim Antriebsstrang der Fig. 4 handelt es sich bei dieser Übersetzung lediglich um die Übersetzung der Stirnradstufe 10, über welche die elektrische Maschine 5 an die Welle der Kupplung 9 angeschlossen ist. Beim Antriebsstrangs der Fig. 3, also bei einem Achshybrid, würden diese Übersetzungen die Achs- und Getriebeübersetzung umfassen.

Gemäß Fig. 6 sinkt das am Abtrieb wirksame Moment M_{AB} bereits zwischen den Zeitpunkten t1 und t2, da das Moment der elektrischen Maschine 5 bezogen auf die zuschaltende Kupplung aufgebaut wird und die Übersetzung des Zielgangs der auszuführenden Zughochschaltung kleiner ist als die Übersetzung des Ist-Gangs derselben.

Fig. 7 zeigt eine Weiterbildung des Verfahrens der Fig. 6, in welcher die Lastverlagerung bzw. Lastübernahme vom Verbrennungsmotor 1 auf die elektrische Maschine 5 nicht zum Zeitpunkt t2 beendet wird, sondern vielmehr erst zum Zeitpunkt t3.

So kann Fig. 7 entnommen werden, dass das vom Verbrennungsmotor 1 bereitgestellte Moment M_{VM} zwischen den Zeitpunkten t1 und t3 reduziert wird, und dass das von der elektrischen Maschine 5 bereitgestellte Moment M_{EM} zwischen den Zeitpunkten t1 und t3 erhöht wird. In Fig. 7 ist die zumindest teilweise Verlagerung des vom Verbrennungsmotor 1 bereitgestellten Moments auf die elektrische Maschine 5 demnach dann beendet, wenn das zuschaltende Schaltelement so weit geschlossen ist bzw. dessen Übertragungsfähigkeit so weit erhöht wurde, dass das zuschaltende Schaltelement das vom Verbrennungsmotor 1 bereitgestellte Moment M_{VM} vollständig übertragen kann.

Der Vorteil der Variante der Fig. 7 gegenüber der Variante der Fig. 6 besteht darin, dass in der Variante der Fig. 7 der Lastübergang bzw. die Lastübernahme vom Verbrennungsmotor 1 auf die elektrische Maschine 5 langsamer erfolgt, sodass sich etwaige Abweichungen der tatsächlichen Momente von elektrischer Maschine 5 und Verbrennungsmotor 1 weniger stark auf eine Schaltung auswirken.

Fig. 9 verdeutlicht die Ausführung einer erfindungsgemäßen Zugrückschaltung an einem Antriebsstrang eines Hybridfahrzeugs, wobei Fig. 9 entnommen werden kann, dass zwischen den Zeitpunkten t1 und t2, also während des Absenkens der Übertragungsfähigkeit des wegschaltenden, reibschlüssigen Schaltelements bis zum Rutschen desselben zum Zeitpunkt t2, einerseits das vom Verbrennungsmotor bereitgestellte Moment M_{VM} reduziert und andererseits das von der elektrischen Maschine 5 bereitgestellte Moment M_{EM} erhöht wird. Diese Erhöhung sowie Reduktion der Momente M_{VM} und M_{EM} erfolgt in Fig. 9 wiederum gleichzeitig mit dem Beginn der der Absenkung bzw. des Absenkvorgangs der Übertragungsfähigkeit des wegschaltenden Schaltelements und demnach beginnend mit dem Zeitpunkt t1. Die Erhöhung sowie Reduktion der Momente M_{VM} und M_{EM} ist im Zeitpunkt t2 beendet, also dann, wenn das wegschaltende reibschlüssige Schaltelement zu Rutschen beginnt.

Zum Ende einer auszuführenden Zughochschaltung bzw. Zugrückschaltung wird die zumindest teilweise Verlagerung der Last von dem Verbrennungsmotor 1 auf die elektrische Maschine 5 des jeweiligen Hybridantriebsstrangs rückgängig gemacht, nämlich derart, dass mit Beendigung der auszuführenden Schaltung die Last von der jeweiligen elektrischen Maschine 5 auf den jeweiligen Verbrennungsmotor 1 wieder zurückverlagert wird, indem das vom Verbrennungsmotor 1 bereitgestellte Moment M_{VM} wieder erhöht und das von der elektrischen Maschine 5 bereitgestellte Moment M_{EM} wieder reduziert wird.

Im Extremfall kann bei der Ausführung einer erfindungsgemäßen Zughochschaltung oder einer erfindungsgemäßen Zugrückschaltung das vom Verbrennungsmotor 1 bereitgestellte Moment ganz abgebaut werden, wobei dann bezogen auf den Verbrennungsmotor 1 eine zugkraftunterbrochene Schaltung ausgeführt wird und am Abtrieb 2 Antriebsmoment und Zugkraft ausschließlich von der jeweiligen elektrischen Maschine 5 bereitgestellt wird.

Die erfindungsgemäßen Schaltungen sind nur für Zugschaltungen, nämlich für Zughochschaltungen und Zugrückschaltungen, von Bedeutung. Für Schubschaltungen hingegen ist das erfindungsgemäße Verfahren nicht von Bedeutung, da ein Verbrennungsmotor bei einer Schubabschaltung keinen Kraftstoff verbraucht.

Mit der Erfindung können demnach Schaltungen, nämlich Zughochschaltungen und Zugrückschaltungen, ausgeführt werden, die durch einen abgesenkten Schaltbetrieb gekennzeichnet sind, bei denen das am Abtrieb wirksame Moment M_{AB} gegenüber konventionell durchgeführten Schaltungen zur Reduzierung der Verlustleistung verringert ist. Dies kann sowohl bei rein verbrennungsmotorischen Antriebsaggregaten als auch bei Hybridantrieben zum Einsatz kommen.

Nach einem weiteren Aspekt der hier vorliegenden Erfindung werden Zughochschaltungen und Zugrückschaltungen mit abgesenktem Schaltbetrieb, also unter Verringerung des vom Verbrennungsmotor bereitgestellten Moments M_{VM} bzw. des am Abtrieb wirksamen Moments M_{AB}, nur dann ausgeführt, wenn definierte Bedingungen einzeln oder in Kombination miteinander erfüllt sind.

Bei einer ersten solchen Bedingung kann es sich um eine definierte Fahrsituation des Kraftfahrzeugs handeln. So kann vorgesehen sein, den abgesenkten Schaltbetrieb nur dann zuzulassen, wenn keine Kurvenfahrt mit erhöhter Querbeschleunigung und/oder keine Bergfahrt des Kraftfahrzeugs vorliegt.

Bei einer weiteren solchen Bedingung kann es sich um die Verkehrssituation handeln, in welcher das Kraftfahrzeug betrieben wird. So kann vorgesehen sein, den abgesenkten Schaltbetrieb nur dann zuzulassen, wenn keine Einfahrt in einen Kreisverkehr und/oder wenn keine Fahrt auf einem Beschleunigungsstreifen zum Einspuren des Kraftfahrzeugs und/oder wenn kein Überholvorgang des Kraftfahrzeugs vorliegt.

Bei einer weiteren Bedingung kann es sich um einen Betriebsmodus bzw. Fahrmodus des Kraftfahrzeugs handeln. So kann vorgesehen sein, dass der abgesenkte Schaltbetrieb nur in einem sogenannten Eco-Betriebsmodus des Kraftfahrzeugs zugelassen wird, der automatisch oder durch Betätigung eines Bedienelements einen kraftstoffsparenden Betriebsmodus des Kraftfahrzeug aktiviert.

Weiterhin kann vorgesehen sein, den abgesenkten Schaltbetrieb nur dann zuzulassen, wenn ein Zielgang der auszuführenden Zughochschaltung oder Zugrückschaltung ein relativ hoher Gang des automatischen Schaltgetriebes ist.

So kann vorgesehen sein, den abgesenkten Schaltbetrieb nur dann zuzulassen, wenn der Zielgang der auszuführenden Schaltung einer der letzten drei Gänge, vorzugsweise einer der letzten zwei Gänge, des automatischen Schaltgetriebes ist.

Bei einem 7-Gang-Getriebe kann vorgesehen sein, den abgesenkten Schaltbetrieb ausschließlich bei einer Schaltung in den fünften, sechsten oder siebten Gang des 7-Gang-Getriebes zuzulassen. So liegt dieser Variante der Erfindung die Erkenntnis zugrunde, dass dann, wenn ein relativ kleiner, unterer Zielgang einer auszuführenden Schaltung vorliegt, ein abgesenkter Schaltbetrieb störend sein kann, da untere Zielgänge in der Regel Fahrsituationen in Kreuzungen, in Kreisverkehren oder beim Abbiegen betreffen.

Ferner kann vorgesehen sein, den abgesenkten Schaltbetrieb bei Ausführung einer Zughochschaltung oder Zugrückschaltung nur dann zuzulassen, wenn eine fahrerseitige Fahrpedalbetätigung eines Fahrpedals bzw. Gaspedals des Antriebsstrangs kleiner als ein Grenzwert ist.

Mit einer vorteilhaften Weiterbildung dieses Aspekts der Erfindung kann vorgesehen sein, die Ausführung einer Zughochschaltung oder Zugrückschaltung durch Aufbauen einer aktuatorischen Gegenkraft am Fahrpedal dem Fahrer automatisch anzukündigen. Bei dieser Weiterbildung wird über einen Aktuator, der dem Fahrpedal zugeordnet ist, eine bevorstehende Ausführung einer Zughochschaltung oder Zugrückschaltung angekündigt, nämlich durch Aufbauen eines Gegendrucks am Fahrpedal. Abhängig davon, wie der Fahrer auf diese Ankündigung am Fahrpedal reagiert, kann dann der abgesenkte Schaltbetrieb zugelassen werden oder nicht. So kann vorgesehen sein, dass dann, wenn der Fahrer in Reaktion auf den Gegendruck am Fahrpedal die Fahrpedalbetätigung relativ stark reduziert, den abgesenkten Schaltbetrieb für die auszuführende Zughochschaltung oder Zugrückschaltung zuzulassen.

Dann hingegen, wenn der Fahrer die Fahrpedalbetätigung relativ wenig oder nicht zurück nimmt, kann der absenkte Schaltbetrieb nicht zugelassen bzw. unterdrückt werden

Der Fahrer kann so durch eine entsprechende Fahrpedalbetätigung die Ausführung einer Schaltung, nämlich die Aktivierung oder Deaktivierung des abgesenkten Schaltbetriebs, beeinflussen und so entscheiden, ob die in Folge des abgesenkten Schaltbetriebs verursachte Zugkrafteinbuße bzw. Absenkung des am Abtrieb 2 wirksamen Abtriebsmoments M_{AB} zum Tragen kommt oder nicht.

### Bezugszeichen

- 1: Verbrennungsmotor
- 2: Abtrieb
- 3: Schaltgetriebe
- 4: Trennkupplung
- 5: elektrische Maschine
- 6: Teilgetriebe
- 7: Teilgetriebe
- 8: Lastschaltkupplung
- 9: Lastschaltkupplung
- 10: Stirnradstufe

## Patentansprüche

1. Verfahren zum Betreiben eines Antriebsstrangs eines Kraftfahrzeugs mit einem zumindest einen Verbrennungsmotor aufweisenden Antriebsaggregat und mit einem zwischen das Antriebsaggregat und einen Abtrieb geschalteten, automatischen Schaltgetriebe mit reibschlüssigen Schaltelementen,
nämlich zur Ausführung einer Zughochschaltung unter Beteiligung mindestens eines zuschaltenden reibschlüssigen Schaltelements des automatischen Schaltgetriebes und mindestens eines wegschaltenden reibschlüssigen Schaltelements des automatischen Schaltgetriebes oder zur Ausführung einer Zugrückschaltung unter Beteiligung mindestens eines zuschaltenden reibschlüssigen Schaltelements des automatischen Schaltgetriebes und mindestens eines wegschaltenden reibschlüssigen Schaltelements des automatischen Schaltgetriebes,
wobei zur Ausführung einer Zughochschaltung zumindest während des Anlegevorgangs eines zuschaltenden reibschlüssigen Schaltelements das vom Verbrennungsmotor bereitgestellte Moment reduziert wird, und
wobei zur Ausführung einer Zugrückschaltung zumindest während des Absenkvorgangs der Übertragungsfähigkeit eines wegschaltenden reibschlüssigen Schaltelements das vom Verbrennungsmotor bereitgestellte Moment reduziert wird,
**dadurch gekennzeichnet, dass**
das Verfahren ausschließlich dann ausgeführt wird, wenn ein Zielgang der auszuführenden Zughochschaltung oder Zugrückschaltung einer der letzten drei Gänge, vorzugsweise einer der letzten zwei Gänge, des automatischen Schaltgetriebes ist.

2. Verfahren nach Anspruch 1, **dadurch gekennzeichnet, dass** zur Ausführung der Zughochschaltung gleichzeitig mit dem Beginn des Anlegevorgangs des zuschaltenden reibschlüssigen Schaltelements das vom Verbrennungsmotor bereitgestellte Moment reduziert wird.

3. Verfahren nach Anspruch 1 oder 2, **dadurch gekennzeichnet, dass** dann, wenn bei einem Antriebstrang eines Hybridfahrzeugs das Antriebsaggregat zusätzlich zum Verbrennungsmotor eine elektrische Maschine umfasst, und dann, wenn bei der Ausführung der Zughochschaltung die elektrische Maschine nicht über an der Ausführung der Zughochschaltung beteiligte reibschlüssige Schaltelemente des automatischen Schaltgetriebes auf den Abtrieb wirkt, zumindest während des Anlegevorgangs des zuschaltenden reibschlüssigen Schaltelements das vom Verbrennungsmotor bereitgestellte Moment reduziert und das von der elektrischen Maschine bereitgestellte Moment erhöht wird, um die Reduktion des vom Verbrennungsmotor bereitgestellten Moments zumindest teilweise zu kompensieren.

4. Verfahren nach Anspruch 3, **dadurch gekennzeichnet, dass** die zumindest teilweise Verlagerung des bereitgestellten Moments von dem Verbrennungsmotor auf die elektrische Maschine gleichzeitig mit dem Beginn des Anlegevorgangs des zuschaltenden reibschlüssigen Schaltelements beginnt.

5. Verfahren nach Anspruch 4, **dadurch gekennzeichnet, dass** die Erhöhung des von der elektrischen Maschine bereitgestellten Moments zur zumindest teilweisen Verlagerung des bereitgestellten Moments von dem Verbrennungsmotor auf die elektrische Maschine dann beendet wird, wenn der Anlegevorgang des zuschaltenden reibschlüssigen Schaltelements abgeschlossen ist.

6. Verfahren nach Anspruch 4, **dadurch gekennzeichnet, dass** die Erhöhung des von der elektrischen Maschine bereitgestellten Moments zur zumindest teilweisen Verlagerung des bereitgestellten Moments von dem Verbrennungsmotor auf die elektrische Maschine dann beendet wird, wenn das zuschaltende reibschlüssige Schaltelements soweit geschlossen ist, dass es das volle vom Verbrennungsmotor bereitgestellte Moment vollständig überträgt.

7. Verfahren nach einem der Ansprüche 1 bis 6, **dadurch gekennzeichnet, dass** zur Ausführung der Zugrückschaltung gleichzeitig mit dem Beginn des Absenkvorgangs der Übertragungsfähigkeit des wegschaltenden reibschlüssigen Schaltelements das vom Verbrennungsmotor bereitgestellte Moment reduziert wird.

8. Verfahren nach einem der Ansprüche 1 bis 7, **dadurch gekennzeichnet, dass** dann, wenn bei einem Antriebstrang eines Hybridfahrzeugs das Antriebsaggregat zusätzlich zum Verbrennungsmotor eine elektrische Maschine umfasst, und dann, wenn bei der Ausführung der Zugrückschaltung die elektrische Maschine nicht über an der Ausführung der Zughochschaltung beteiligte reibschlüssige Schaltelemente des automatischen Schaltgetriebes auf den Abtrieb wirkt, zumindest während des Absenkvorgangs der Übertragungsfähigkeit des wegschaltenden reibschlüssigen Schaltelements das vom Verbrennungsmotor bereitgestellte Moment reduziert und das von der elektrischen Maschine bereitgestellte Moment erhöht wird, um die Reduktion des vom Verbrennungsmotor bereitgestellten Moments zumindest teilweise zu kompensieren.

9. Verfahren nach Anspruch 8, **dadurch gekennzeichnet, dass** die zumindest teilweise Verlagerung des bereitgestellten Moments von dem Verbrennungsmotor auf die elektrische Maschine gleichzeitig mit dem Beginn des Absenkvorgangs der Übertragungsfähigkeit des wegschaltenden reibschlüssigen Schaltelements beginnt.

10. Verfahren nach einem der Ansprüche 1 bis 9, **dadurch gekennzeichnet, dass** am Ende der auszuführenden Schaltung das vom Verbrennungsmotor bereitgestellte Moment wieder erhöht und bei einem Antriebstrang eines Hybridfahrzeugs weiterhin das von der elektrischen Maschine bereitgestellte Moment wieder reduziert wird.

11. Verfahren nach einem der Ansprüche 1 bis 10, **dadurch gekennzeichnet, dass** das Verfahren ausschließlich dann ausgeführt wird, wenn als Fahrsituation keine Bergfahrt und/oder keine Kurvenfahrt vorliegt.

12. Verfahren nach einem der Ansprüche 1 bis 10, **dadurch gekennzeichnet, dass** das Verfahren ausschließlich dann ausgeführt wird, wenn als Verkehrssituation keine Einfahrt in einen Kreisverkehr und/oder kein Überholvorgang vorliegt.

13. Verfahren nach einem der Ansprüche 1 bis 12, **dadurch gekennzeichnet, dass** dasselbe ausschließlich dann ausgeführt wird, wenn eine fahrerseitige Fahrpedalbetätigung kleiner als ein Grenzwert ist.

14. Verfahren nach Anspruch 13 **dadurch gekennzeichnet, dass** die Ausführung einer Zughochschaltung oder Zugrückschaltung durch Aufbauen einer aktuatorischen Gegenkraft am Fahrpedal dem Fahrer automatisch angekündigt wird, und dass dann, wenn nachfolgend fahrerseitig die Fahrpedalbetätigung relativ stark zurückgenommen wird, zur Ausführung der Schaltung das vom Verbrennungsmotor bereitgestellte Moment reduziert wird, wohingegen dann, wenn nachfolgend fahrerseitig die Fahrpedalbetätigung relativ wenig oder nicht zurückgenommen wird, zur Ausführung der Schaltung das vom Verbrennungsmotor bereitgestellte Moment nicht reduziert wird.

## Claims

1. Method for operating a drivetrain of a motor vehicle having a drive assembly, which has at least one internal combustion engine, and having an automatic shift transmission which is connected between the drive assembly and a drive output and which has frictionally acting shift elements,
specifically for executing a traction upshift involving at least one frictionally acting shift element to be engaged of the automatic shift transmission and at least one frictionally acting shift element to be disengaged of the automatic shift transmission, or for performing a traction downshift involving at least one frictionally acting shift element to be engaged of the automatic shift transmission and at least one frictionally acting shift element to be disengaged of the automatic shift transmission,
wherein, for the execution of a traction upshift, at least during the engaging process of a frictionally acting shift element to be engaged, the torque provided by the internal combustion engine is reduced, and
wherein, for the execution of a traction downshift, at least during the process of lowering the transmission capability of a frictionally acting shift element to be disengaged, the torque provided by the internal combustion engine is reduced,
**characterized in that**
the method is executed only if a target gear ratio of the traction upshift or traction downshift to be performed is one of the final three gear ratios, preferably one of the final two gear ratios, of the automatic shift transmission.

2. Method according to Claim 1, **characterized in that**, for the execution of the traction upshift, the torque provided by the internal combustion engine is reduced at the same time as the start of the engaging process of the frictionally acting shift element to be engaged.

3. Method according to Claim 1 or 2, **characterized in that**, if, in the case of a drivetrain of a hybrid vehicle, the drive assembly comprises an electric machine in addition to the internal combustion engine, and if, during the execution of the traction upshift, the electric machine does not act on the drive output via frictionally acting shift elements of the automatic shift transmission which are involved in the execution of the traction upshift, it is the case that, at least during the engaging process of the frictionally acting shift element to be engaged, the torque provided by the internal combustion engine is reduced and the torque provided by the electric machine is increased, in order to at least partially compensate the reduction of the torque provided by the internal combustion engine.

4. Method according to Claim 3, **characterized in that** the at least partial transfer of the provided torque from the internal combustion engine to the electric machine begins at the same time as the start of the engaging process of the frictionally acting shift element to be engaged.

5. Method according to Claim 4, **characterized in that** the increase of the torque provided by the electric machine for the at least partial transfer of the provided torque from the internal combustion engine to the electric machine is ended when the engaging process of the frictionally acting shift element to be engaged has been completed.

6. Method according to Claim 4, **characterized in that** the increase of the torque provided by the electric machine for the at least partial transfer of the provided torque from the internal combustion engine to the electric machine is ended when the frictionally acting shift element to be engaged has been closed to such an extent that it fully transmits the entire torque provided by the internal combustion engine.

7. Method according to any of Claims 1 to 6, **characterized in that**, for the execution of the traction downshift, the torque provided by the internal combustion engine is reduced at the same time as the start of the process of lowering the transmission capability of the frictionally acting shift element to be disengaged.

8. Method according to Claim 1 or 7, **characterized in that**, if, in the case of a drivetrain of a hybrid vehicle, the drive assembly comprises an electric machine in addition to the internal combustion engine, and if, during the execution of the traction downshift, the electric machine does not act on the drive output via frictionally acting shift elements of the automatic shift transmission which are involved in the execution of the traction upshift, it is the case that, at least during the process of lowering the transmission capability of the frictionally acting shift element to be disengaged, the torque provided by the internal combustion engine is reduced and the torque provided by the electric machine is increased, in order to at least partially compensate the reduction of the torque provided by the internal combustion engine.

9. Method according to Claim 8, **characterized in that** the at least partial transfer of the provided torque from the internal combustion engine to the electric machine begins at the same time as the start of the process of lowering the transmission capability of the frictionally acting shift element to be engaged.

10. Method according to any of Claims 1 to 9, **characterized in that**, at the end of the shift to be executed, the torque provided by the internal combustion engine is increased again and, in the case of a drivetrain of a hybrid vehicle, the torque provided by the electric machine is furthermore reduced again.

11. Method according to any of Claims 1 to 10, **characterized in that** the method is executed exclusively in the case of a driving situation which does not involve uphill driving and/or does not involve cornering.

12. Method according to any of Claims 1 to 10, **characterized in that** the method is executed exclusively in the case of a traffic situation which does not involve entry into a roundabout and/or does not involve an overtaking process.

13. Method according to any of Claims 1 to 12, **characterized in that** said method is executed only if an actuation of an accelerator pedal by a driver is lower than a threshold value.

14. Method according to Claim 13, **characterized in that** the execution of a traction upshift or traction downshift is automatically signalled to the driver by the build-up of an actuator-imparted opposing force at the accelerator pedal, and **in that**, if the actuation of the accelerator pedal is subsequently withdrawn to a relatively great extent by the driver, the torque provided by the internal combustion engine is reduced for the execution of the shift, whereas, if the actuation of the accelerator pedal is subsequently withdrawn to a relatively small extent or not withdrawn by the driver, the torque provided by the internal combustion engine is not reduced for the execution of the shift.

## Revendications

1. Procédé pour faire fonctionner une chaîne cinématique d'un véhicule automobile, comprenant un groupe propulseur qui possède au moins un moteur à combustion interne et comprenant une boîte de vitesses automatique à éléments de changement de rapport entraînés par friction montée entre le groupe propulseur et un arbre de sortie,
c'est-à-dire en vue de réaliser le passage d'un rapport supérieur en traction avec la participation d'au moins un élément de changement de rapport entraîné par friction s'engageant de la boîte de vitesses automatique et d'au moins un élément de changement de rapport entraîné par friction se dégageant de la boîte de vitesses automatique, en vue de réaliser le passage d'un rapport supérieur en traction, le couple fourni par le moteur à combustion interne étant réduit au moins pendant l'opération d'application d'un élément de changement de rapport entraîné par friction s'engageant, et
en vue de réaliser le passage d'un rapport inférieur en traction, le couple fourni par le moteur à combustion interne étant réduit au moins pendant l'opération de diminution de la capacité de transmission d'un élément de changement de rapport entraîné par friction se dégageant,
**caractérisé en ce que**
le procédé est exclusivement mis en œuvre lorsqu'un rapport cible du passage d'un rapport supérieur en traction ou du passage d'un rapport inférieur en traction à réaliser est l'un des trois derniers rapports, de préférence l'un des deux derniers rapports de la boîte de vitesses automatique.

2. Procédé selon la revendication 1, **caractérisé en ce qu'**en vue de réaliser le passage d'un rapport supérieur en traction, le couple fourni par le moteur à combustion interne est réduit simultanément avec le début de l'opération d'application de l'élément de changement de rapport entraîné par friction s'engageant.

3. Procédé selon la revendication 1 ou 2, **caractérisé en ce que** lorsqu'avec une chaîne cinématique d'un véhicule hybride, le groupe propulseur comprend une machine électrique en plus du moteur à combustion interne, et lorsque lors de la réalisation du passage d'un rapport supérieur en traction la machine électrique n'agit pas sur l'arbre de sortie par le biais des éléments de changement de rapport entraînés par friction de la boîte de vitesses automatique qui participent à la réalisation du passage d'un rapport supérieur, le couple fourni par le moteur à combustion interne est réduit et le couple fourni par la machine électrique est augmenté au moins pendant l'opération d'application de l'élément de changement de rapport entraîné par friction s'engageant afin de compenser au moins partiellement la réduction du couple fourni par le moteur à combustion interne.

4. Procédé selon la revendication 3, **caractérisé en ce que** le transfert au moins partiel du couple fourni du moteur à combustion interne à la machine électrique commence simultanément avec le début de l'opération d'application de l'élément de changement de rapport entraîné par friction s'engageant.

5. Procédé selon la revendication 4, **caractérisé en ce que** l'augmentation du couple fourni par la machine électrique en vue du transfert au moins partiel du couple fourni du moteur à combustion interne à la machine électrique prend fin lorsque l'opération d'application de l'élément de changement de rapport entraîné par friction s'engageant est terminée.

6. Procédé selon la revendication 4, **caractérisé en ce que** l'augmentation du couple fourni par la machine électrique en vue du transfert au moins partiel du couple fourni du moteur à combustion interne à la machine électrique prend fin lorsque l'élément de changement de rapport entraîné par friction s'engageant est fermé au point qu'il transmet entièrement l'intégralité du couple fourni par le moteur à combustion interne.

7. Procédé selon l'une des revendications 1 à 6, **caractérisé en ce qu'**en vue de réaliser le passage d'un rapport inférieur en traction, le couple fourni par le moteur à combustion interne est réduit simultanément avec le début de l'opération de diminution de la capacité de transmission de l'élément de changement de rapport entraîné par friction se dégageant.

8. Procédé selon l'une des revendications 1 à 7, **caractérisé en ce que** lorsqu'avec une chaîne cinématique d'un véhicule hybride, le groupe propulseur comprend une machine électrique en plus du moteur à combustion interne, et lorsque lors de la réalisation du passage d'un rapport inférieur en traction la machine électrique n'agit pas sur l'arbre de sortie par le biais des éléments de changement de rapport entraînés par friction de la boîte de vitesses automatique qui participent à la réalisation du passage d'un rapport supérieur, le couple fourni par le moteur à combustion interne est réduit et le couple fourni par la machine électrique est augmenté au moins pendant l'opération de diminution de la capacité de transmission de l'élément de changement de rapport entraîné par friction se dégageant afin de compenser au moins partiellement la réduction du couple fourni par le moteur à combustion interne.

9. Procédé selon la revendication 8, **caractérisé en ce que** le transfert au moins partiel du couple fourni du moteur à combustion interne à la machine électrique commence simultanément avec le début de l'opération de diminution de la capacité de transmission de l'élément de changement de rapport entraîné par friction se dégageant.

10. Procédé selon l'une des revendications 1 à 9, **caractérisé en ce qu'**à la fin du changement de rapport à effectuer, le couple fourni par le moteur à combustion interne est de nouveau augmenté et dans le cas d'une chaîne cinématique d'un véhicule hybride, en plus de cela le couple fourni par la machine électrique est de nouveau réduit.

11. Procédé selon l'une des revendications 1 à 10, **caractérisé en ce que** le procédé est uniquement mis en œuvre lorsque la situation de conduite en présence n'est pas un trajet en côte et/ou un trajet en virage.

12. Procédé selon l'une des revendications 1 à 10, **caractérisé en ce que** le procédé est uniquement mis en œuvre lorsque la situation de trafic en présence n'est pas une entrée dans un rond-point et/ou une manœuvre de dépassement.

13. Procédé selon l'une des revendications 1 à 12, **caractérisé en ce que** celui-ci est exclusivement mis en œuvre lorsqu'un actionnement de pédale d'accélérateur côté conducteur est inférieur à une valeur limite.

14. Procédé selon la revendication 13, **caractérisé en ce que** la réalisation du passage d'un rapport supérieur en traction ou du passage d'un rapport inférieur en traction est annoncée automatiquement au conducteur par l'établissement d'une force antagoniste d'actionnement au niveau de la pédale d'accélérateur et **en ce que** lorsque l'actionnement de la pédale d'accélérateur du côté du conducteur est ensuite fortement diminué, le couple fourni par le moteur à combustion interne est réduit en vue de réaliser le changement de rapport, alors qu'en revanche, si l'actionnement de la pédale d'accélérateur du côté du conducteur est ensuite diminué relativement faiblement ou pas du tout, le couple fourni par le moteur à combustion interne n'est pas réduit en vue de réaliser le changement de rapport.
